# EUROPEAN PATENT SPECIFICATION

(11) **EP 2 635 450 B1**
(45) Date of publication and mention of the grant of the patent: **21.12.2016**
(21) Application number: 10859330.2
(22) Date of filing: 05.11.2010
(51) Int. Cl.: B60G 21/055, B60G 5/04

(54) **SUSPENSION ARRANGEMENT FOR A VEHICLE AXLE AND VEHICLE COMPRISING A SUSPENSION ARRANGEMENT**
AUFHÄNGUNGSANORDNUNG FÜR EINE FAHRZEUGACHSE UND FAHRZEUG MIT EINER AUFHÄNGUNGSANORDNUNG
AGENCEMENT DE SUSPENSION POUR ESSIEU DE VÉHICULE ET VÉHICULE LE COMPORTANT

(43) Date of publication of application: 11.09.2013
(73) Proprietor: Volvo Lastvagnar AB, 405 08 Göteborg (SE)
(72) Inventor: FRÖJD, Niklas, SE-43541 Mölnlycke (SE); SVENSSON, Roland, SE-430 22 Väröbacka (SE); HENDRIKS, Jan, SE-426 68 Västra Frölunda (SE)
(74) Representative: Volvo Technology Corporation
(86) International application number: PCT/SE2010/000270
(87) International publication number: WO 2012/060745

(56) References cited:
- EP-A1- 0 914 978
- EP-A1- 0 914 978
- EP-A2- 1 110 848
- WO-A1-03/061996
- WO-A1-2006/032858
- WO-A1-2007/062744
- WO-A1-2010/077186
- DE-A1- 2 842 429
- GB-A- 2 241 679
- US-A1- 2003 209 872
- US-A1- 2007 013 160
- US-B1- 6 513 801
- US-B2- 7 416 342

## Description

### TECHNICAL FIELD

The invention relates to a suspension arrangement for a vehicle axle and a vehicle comprising a suspension method. More particularly, invention relates to a suspension arrangement comprising at least one stabilizer bar which is connected to a bracket.

### BACKGROUND OF THE INVENTION

US 7 416 342 B1 discloses a beam-type suspension for tandem-axle trucks. The suspension includes a pair of equalizing levers permitting the suspension beams to move independently of one another and by that maintaining the loading of the wheels mostly uniform as the vehicle moves over bumps. The lever comprises a single bar pivotally mounted to the hanger attached to the frame. The suspension components pivotally connected to the lever are load-carrying suspension beams, so that the roll stability function of the suspension is integrated in load carrying elements of the suspension. The use of the equalizing levers equalizes the load between the wheels of the vehicle, thereby reducing axle torque while providing good roll stability. The equalizing levers are attached to beams that are attached to the axles. These levers are therefore connected to parts that define the suspension kinematics, or better, that define the movement of the rear axle.

EP1 110 848 B1 discloses a suspension arrangement in a commercial vehicle. A bracket mounted to a longitudinal beam of the vehicle is provided with means for supporting and bearing longitudinal arms, A-arms and two stabilizer bars. Each stabilizer bar is mounted to the bracket with the end section of its torsion section engaging a recess having a rubber bushing which encloses the end section. The end section is arranged in transverse direction relative to the recess in the bracket.

For fastening the stabilizer bar to the bracket and the recess the end section is enclosed with positive locking by a holding sleeve behind the recess. The bracket provides a compact arrangement and supporting and bearing A-arms, longitudinal arms as well as stabilizer bars. This solution requires that the stabilizer bars are mounted onto the bracket at an early stage in the production sequence, as early as the chassis assembly. The correct position of the rubber bushings together with the lateral position of the stabilizer bars is difficult to obtain.

### SUMMARY OF THE INVENTION

It is an object of the invention to provide a suspension arrangement which improves the traction of the vehicle.

Another object is to provide a vehicle comprising such a suspension arrangement.

The objects are achieved by the features of the independent claims. The other claims, the drawing and the description disclose advantageous embodiments of the invention.

A suspension arrangement for a vehicle axle aggregate mounted to a frame of a commercial vehicle is proposed, comprising at least two stabilizer bars arranged in a transverse direction relative to the frame with their torsion sections and being connected to the frame with their end sections. The stabilizer bars are attached to a lever unit, wherein the lever unit has at least one pivot joint with a pivot axis along the transverse direction of the axle aggregate relative to the frame. The stabilizer bars can be pivotably attached to a suspension bracket or attached to a separate bracket mounted to the chassis of the vehicle.

Usually the stabilizer bar has a U-shape with a torsion section in the middle and an end section at each side of the torsion section and is connected at two points to the frame and at each side of the suspension. Particularly the stabilizer bar has a torsion section extending from one side of the frame to the opposite side of the frame. Generally, stabilizer bars as such are well known in the art. The stabilizer bar is a torsion spring provided for resisting body roll movements when interacting with link arms connected to the axle.

The axle aggregate may be a multi-axle aggregate, particularly a rear multi-axle aggregate of an off-road commercial vehicle. By way of example, the axle aggregate may be a tandem axle aggregate, i.e. an axle aggregate with two wheel axles in parallel, with the bracket arranged between the two wheel axles, or an axle aggregate with more than two axles with brackets arranged between the axles. The bracket may be provided for supporting and bearing A-arms and longitudinal link arms connected to the axle.

By attaching the stabilizer bars with their end sections to the lever unit the torsional capability of the stabilizer bars is increased. Particularly, during axle twist in a multi-axle aggregate, e.g. a tandem axle aggregate when the two wheel axles rotate in opposite angles with respect to a longitudinal axis of the vehicle, the lever unit allows a rotational movement of the at least one stabilizer bar with respect to the bracket. The axle aggregate can be a multi-axle aggregate with more than two axles, such as a tridem, which is a three-axle configuration, e.g. a rear axle aggregate with three axles. In such an arrangement, the installation for a tandem axle can be copied and applied between the last two axles as well. By way of example, the stabilizer bar may be connected to the bracket by a bushing. The movement or the stabilizer bar with respect to the bracket, e.g. a movement in the stabilizer bushings, reduces the stabilizer function at least temporarily, allowing the wheel axles of the tandem axle aggregate more freedom to twist, thus improving the tire load on to the ground. Improving the tire load on to the ground results in a better tire grip and improved traction. This is particularly useful on uneven, bumpy ground and during slippery ground conditions.

The invention provides a robust mechanical solution for improving the traction of the vehicle with no need for electronic control of the stabilizer function. Expediently, the invention allows for a pre-assembly of the stabilizer bars to the lever unit, where with the use of fixtures a correct positioning of the rubber bushings and of the stabilizer bars is guaranteed. Also, this pre-assembly does not disrupt the main flow of the assembly line where other trucks that do not have this installation would otherwise have extra time available, which is not desired in a manufacturing process. This pre-assembly can be fixed to the chassis by means of screws mounted from the outside of the truck. This allows for a safer assembly and better ergonomics for the mechanics.

Further, the invention does not intervene with parts that define the suspension kinematics, in order to limit the risk of deteriorating other aspects/features of the suspension, for instance axle steer, axle movement during braking and the like.

According to a favourable embodiment of the invention, the lever unit can have its at least one pivot joint and a receptacle for the at least one stabilizer bar distant from the at least one pivot joint. Thus the rotational movement of the bracket supports the temporary reduction of the torsion function of the stabilizer bar for improving the traction of the tire. In one expedient alternative, one pivot joint can be arranged in the middle of the lever unit. Alternatively, for instance two pivot joints can be arranged side by side in different legs of the lever unit. In this case the lever unit is composed of two separate legs which are connected by a bridge pivotably connected to the two legs of the lever unit.

According to a favourable embodiment of the invention, the stabilizer bars can be pivotably connected to the lever unit. The stabilizer bars can perform their usual anti-roll-stabilizing function particularly on even ground. The lever unit can be provided with a bearing such as a rubber bushing or a roller bearing or the like. Preferably, a pivot axis of the bearing is substantially parallel to the pivot axis of the at least one pivot joint. The stabilizer bars and the lever unit can rotate in conjunction with each other.

According to a favourable embodiment of the invention, a bushing may be arranged in the receptacle of the lever unit. The stabilizer bars can pivot in the bushing. The bushing can be a rubber bushing with damping characteristics. Preferably, a pivot axis of the bushing is substantially parallel to a pivot axis of the at least one pivot joint. The stabilizer bars and the lever unit can rotate in conjunction with each other.

According to a further favourable embodiment of the invention, the bushing may be composed of at least a lower part and an upper part for enclosing the at least one stabilizer bar in the receptacle. Advantageously, the mounting of the stabilizer bars is facilitated thus saving production time and costs.

According to a favourable embodiment of the invention, the stabilizer bars can be arranged above a link arm with respect to a longitudinal beam of the frame. However, the stabilizer bars can be arranged below a link arm with respect to a longitudinal beam of the frame. The position of the stabilizer bars and accordingly of the lever unit can be selected according to actual design and space requirements at the frame.

According to a further favourable embodiment of the invention, the stabilizer bars can be connected to the axle aggregate with a connecting element, wherein the connecting element is one of a rigid rod or a hydraulic unit, wherein preferably in case of a hydraulic unit the hydraulic unit can be adapted to change its neutral position when one wheel axle of a tandem axle aggregate is lifted during an axle twist. Alternatively, the stabilizer bar can be attached with its torsion section to the axle aggregate and the connecting elements can be attached to the lever unit.

According to a favourable embodiment of the invention, the lever unit may be arranged at an outside of the bracket with respect to a longitudinal beam of the frame. Alternatively, the lever unit may be arranged at an inside of the bracket with respect to a longitudinal beam of the frame. The arrangement on both sides of the frame can be symmetric, either inside or outside of the bracket on each side of the frame. However, an asymmetric arrangement can also be possible.

According to a favourable embodiment of the invention, the axle aggregate can be a multi-axle aggregate, e.g. a tandem axle aggregate (also known as Bogie axle) and one stabilizer bar is provided for each wheel axle of the multi-axle aggregate and connected with the end sections to the lever unit, and the lever unit may have its pivot joint between two receptacles for the end sections of the stabilizer bars. The invention is particular useful for a multi-axle aggregate during axle twist, when two wheel axles rotate in opposite angles with respect to a longitudinal axis of the vehicle. The lever unit allows a rotational movement of the two stabilizer bars with respect to the frame and the bracket, respectively. The movement or the stabilizer bars, e.g. a movement in the stabilizer bushings, temporarily reduces the stabilizer function, allowing the wheel axles of the multi-axle aggregate more freedom to twist, thus improving the tire load on to the ground. Improving the tire load on to the ground results in a better tire grip and improved traction. This is particularly useful on uneven, bumpy ground and during slippery ground conditions. The cross-axle roll mobility is improved and the multi-axle-aggregate stiffness is comparable to known solutions without a lever unit. Advantageously, the lever unit can be locked when no additional axle twist is needed or preferred, e.g. when driving on even ground, or when lifting one of more axles off the ground is desired.

According to another aspect of the invention, a vehicle is proposed which comprises a suspension arrangement according to the first aspect of the invention. The vehicle can be a commercial vehicle. Particularly, the vehicle can be an off-road commercial vehicle. Off-road vehicles have high chassis height and a high centre of gravity of the load and thus require good roll stiffness, defined by very stiff stabilizer bars. These stiff stabilizer bars limit the "free" roll of the axles. The "free" roll of the axles is needed for a good traction between the left and right tires. The invention allows better traction which results in a better load distribution between the tires on the left and right side of the vehicle. Although the agility level is primarily defined by the vertical spring travel that the suspension of the vehicle can do, it is found that the agility of the vehicle is also improved by improving the roll movement of the axles of the rear multi-axle aggregate relative to each other by employing the inventive suspension arrangement.

The suspension arrangement according to the first aspect of the invention can be easily mounted. The use of the lever-unit allows for an improved assembly of the stabilizer bars to the chassis (frame). The assembly quality can be improved because a risk of wrong positioning of the rubber bushing can be reduced as well as a reduction of assembly time and an improvement of ergonomics can be achieved, as the lever unit can be easily accessed and fastened on the bracket from outside.

The invention allows manufacturing a pre-assembly unit by pre-mounting of the stabilizer bars to the lever unit at a separate station, where the assembly does not interrupt the main assembly flow. The pre-assembly unit can be connected to the existing axle assemblies, e.g. by lowering the pre-assembly unit from above onto the existing axle assembly. Further, a better quality of the assembly of the rubber bushing is possible.

During chassis docking, when the frame structure is lowered from above onto the axle assemblies, the lever unit can be used as guidance for a correct position of the chassis structure relative to the axle assemblies.

The lever unit can then be fixed to the bracket by means of a screw that is inserted from the outside of the chassis, particularly inserted horizontally from the outside of the chassis. Mounting is facilitated and ergonomics improved.

### BRIEF DESCRIPTION OF THE DRAWINGS

The present invention together with the above-mentioned and other objects and advantages may best be understood from the following detailed description of the embodiment, but not restricted to the embodiments, wherein is shown schematically:
- Fig. 1a, 1b: in a side view an example embodiment of a suspension arrangement in a tandem axle aggregate according to the invention (Fig. 1a) and in a tridem axle aggregate (Fig. 1b);
- Fig. 2a, 2b: a detailed view of a lever unit according to the embodiment in Fig. 1 with one pivot joint (Fig. 2a), and an alternative lever unit with two pivot joints (Fig. 2b);
- Fig. 3a-3c: the tandem axle aggregate of Fig. 1a performing an axle twist; in a side view (Fig. 3a), in a front view (Fig. 3b) and a schematic perspective view of axles with and without axle twist (Fig. 3b);
- Fig. 4: in a side view in a side view the tandem axle aggregate similar to Fig. 1a performing an axle twist with hydraulic connections of stabilizer bars;
- Fig. 5a, 5b: an alternative arrangement of a lever unit at a bracket (with end sections of stabilizer bars attached to the lever unit (Fig. 5a) and an alternative arrangement with connecting elements of the end sections attached to the lever unit (Fig. 5b);
- Fig. 6: a pre-assembly of a lever unit with stabilizer bars, rubber bushings and holding sleeves;
- Fig. 7: mounting an axle assembly including the pre assembly of Fig. 6 to a frame structure; and
- Fig. 8: the frame lowered to the axle assembly of Fig. 7.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

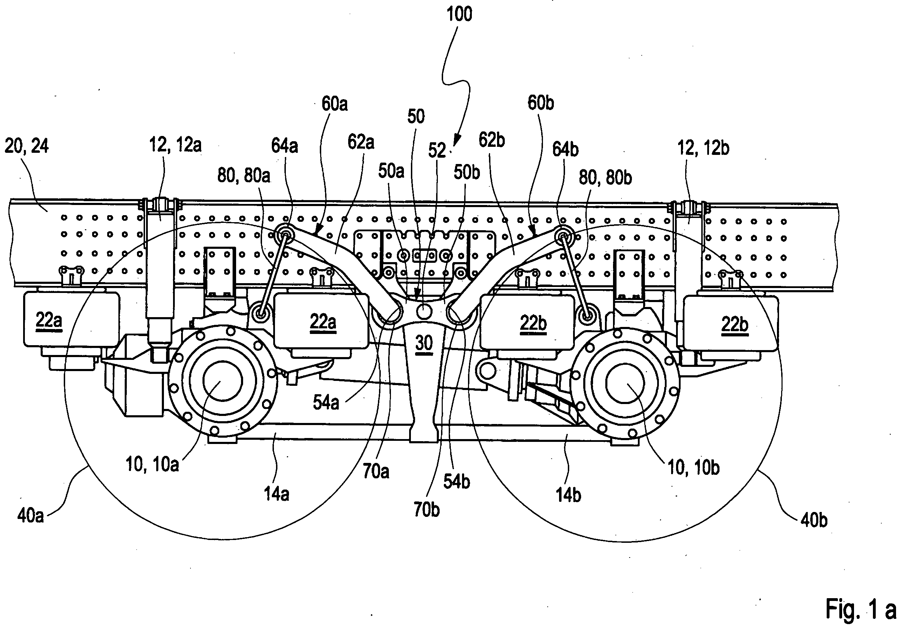

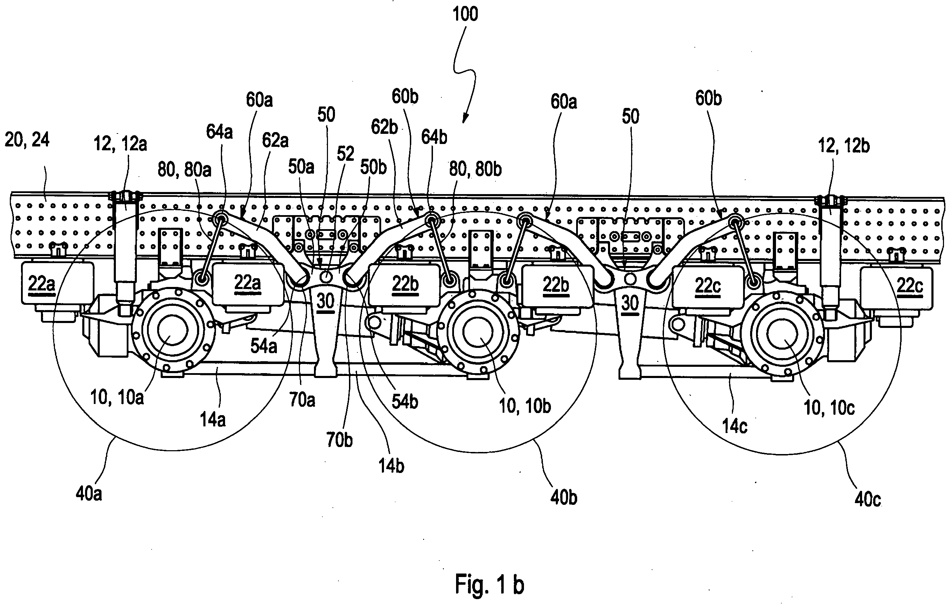

Fig. 1 a and 1 b depict schematically in a side view a suspension arrangement 100 of a commercial vehicle 200 each displaying a multi-axle aggregate 10. Fig. 1a shows an axle aggregate 10 configured as a tandem axle aggregate 10 comprising a first wheel axle 10a and a second wheel axle 10b is connected to a longitudinal beam 24 of a frame 20 of the vehicle 200. Tires 40a, 40b mounted to the wheel axles 10a, 10b are indicated by thin lines in the Figure. The tandem axle aggregate 10 may be composed of link arm and suspension as well as drive components as known in the art. The suspension arrangement 100 seen from the opposite side of the frame 20 is symmetrical to the arrangement depicted in the Figure.

The connection of the axle aggregate 10 to the longitudinal beam 24 is established by way of a bracket 30 which is connected to the longitudinal beam 20 with its upper section and which supports and bears link arms 14, particularly longitudinal link arms 14a, 14b at its lower section. The bracket 30 is arranged in a fixed position with respect to the frame 20. Additional link arms such as A-arms or the like may be provided but are not displayed in the Figure.

Each wheel axle 10a and 10b is suspended hydraulic dampers 12, particularly hydraulic dampers 12a, 12b for each wheel axle 10a and 10b connected to the longitudinal beam 24, and by a pair air bellows 22a and 22b. The pairs of air bellows 22a, 22b are arranged, in longitudinal direction, before and behind the respective wheel axle 10a and 10b. The axle aggregate 10 can, however, alternatively be suspended by a leaf-spring suspension instead of an air suspension with air bellows.

The axle aggregate 10 further comprises a stabilizer bar 60, particularly a stabilizer bar 60a of the first wheel axle 10a and a stabilizer bar 60b of the second wheel axle 10b. Each stabilizer bar 60a, 60b has substantially a U-shape with a torsion section (not to be seen in the Figure) in the middle and end sections 62 at each side of the torsion section and arranged crosswise to the torsion section.

The stabilizer bars 60a, 60b are arranged above the link arms 14a, 14b with respect to the longitudinal beam 24 of the frame 20. Alternatively, in an embodiment not illustrated, the stabilizer bars 60a, 60b can be arranged below the link arms 14a, 14b with respect to the longitudinal beam 24 of the frame 20.

The stabilizer bars 60a, 60b are arranged with their torsion section (not to be seen in the Figure) in transverse direction relative to the frame 20 and their end sections 62a, 62b symmetrically to the bracket 30.

End section 62a is arranged between the bracket 30 and the first wheel axle 10a and end section 62b is arranged between the bracket 30 and the second wheel axle 10b. Each stabilizer bar 60a, 60b is connected to the respective wheel axle 10a and 10b with a connecting element 80. In the embodiment illustrated in the Figure, the connecting element 80 is a rigid rod 80a and 80b, respectively, extending from a free end 64a, 64b of the stabilizer bar end section 62a, 62b to a pivot joint of the respective wheel axle 10a, 10b.

Close to an interface between the torsion section and the end sections 62a, 62b the stabilizer bars 60a, 60b are attached to a lever unit 50 which is pivotably mounted to the bracket 30. The lever unit 50 has a pivot joint 52 in the middle and a receptacle 54, particularly a receptacle 54a, 54b for each of the stabilizer bars 60a, 60b. The receptacles 54a, 54b are arranged symmetrically to each other in first and second side sections 50a, 50b with respect to the pivot joint 52 in a distance from the pivot joint 52. Alternatively, the receptacles 54a, 54b can be arranged asymmetrically with respect to the pivot joint 52. The pivot joint 52 can be a rubber bushing or any kind of bearing, for instance a roller or ball bearing.

In each receptacle 54a, 54b a bushing 70, particularly a bushing 70a for the first stabilizer bar 60a and a bushing 70b for the second stabilizer bar 60b is arranged. A pivot axis of the bushings 70a, 70b is substantially parallel to a pivot axis of the pivot joint 52. The bushing 70a, 70b may be a rubber bushing.

Fig. 1b depicts a tridem axle aggregate 10 with three wheel axles 10a, 10b, 10c. A bracket 30 is arranged between two axles 10a, 10b, 10c. The arrangement corresponds to the tandem axle aggregate 10 in Fig. 1a. The installation for the tandem axle aggregate 10 can be copied and applied between the last two axles 10b, 10c as well. In case the tridem axle aggregate 10 allows for an axle lift, for instance by lifting axle 40c, the corresponding lever unit 50 (here the lever unit 50 on the right-hand side in the Figure) has to be locked. If there is no axle-lift functionality provided, locking the lever unit 50 is not necessary.

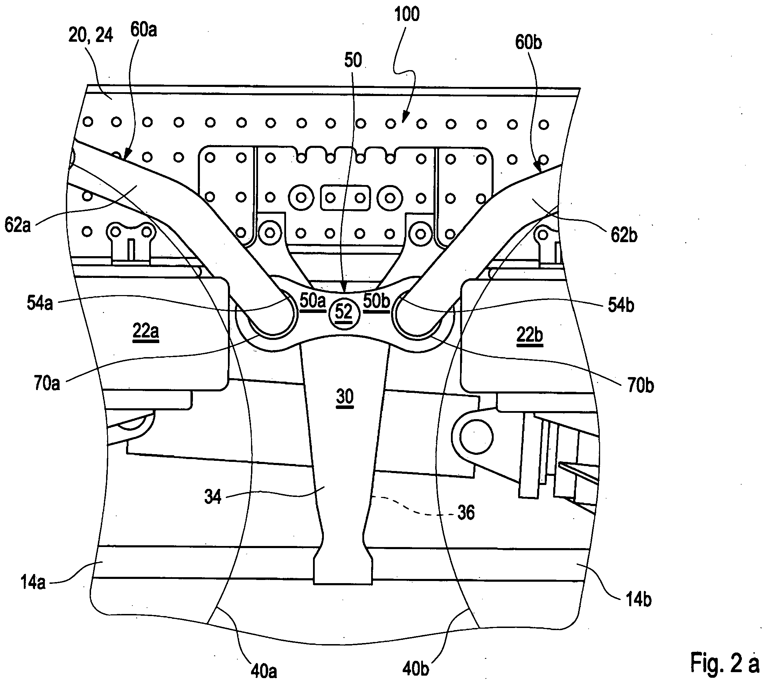

Fig. 2a illustrates the lever unit 50 of Fig. 1 in more detail. The lever unit 50 is arranged at an outside 34 of the bracket 30 with respect to the longitudinal beam 24 of the frame 20 so that the end sections 62a, 62b of the stabilizer bars 60a, 60b pass the bracket 30 at both sides. The lever unit 50 has a single pivot joint 52 in the middle of the lever unit 50 between the receptacles 54a, 54b for the stabilizer bars 60a, 60b as described above.

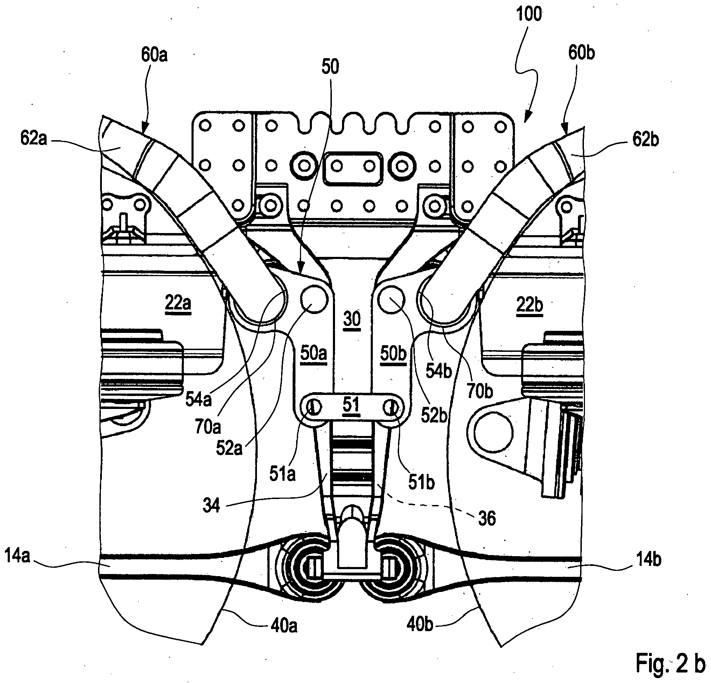

Fig. 2b illustrates an alternative embodiment of the lever unit 50. The lever unit 50 comprises two pivot joints 52a, 52b, one of each being arranged in one of the side sections 50a, 50b. The side sections 50a, 50b are now separate from each other and may have a predominantly L-shape. In one leg of the L-shape one receptacle 54a, 54b is arranged at one end of the leg and at the opposite end one pivot joint 52a, 52b is arranged. At the free end of the second leg of the L-shape a bridge 51 is pivotably attached to the two side sections 50a, 50b by a pivot joint 51 a, 51 b in each side section 50a, 50b. When one stabilizer bar 60a, 60b is moved about its pivot joint 52a, 52b, the legs of the side sections 50a, 50b with the bridge 51 move in a cradle-like fashion.

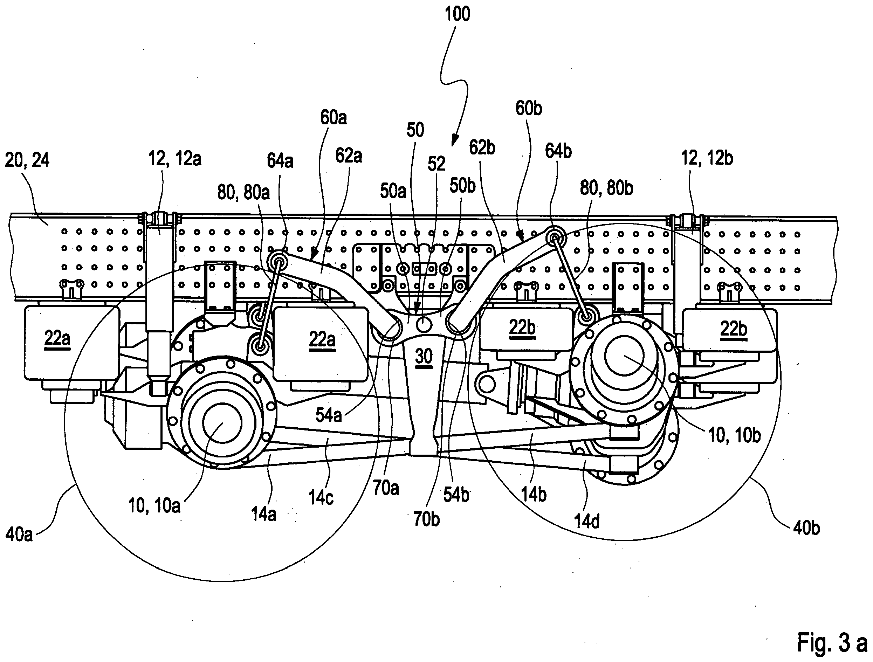

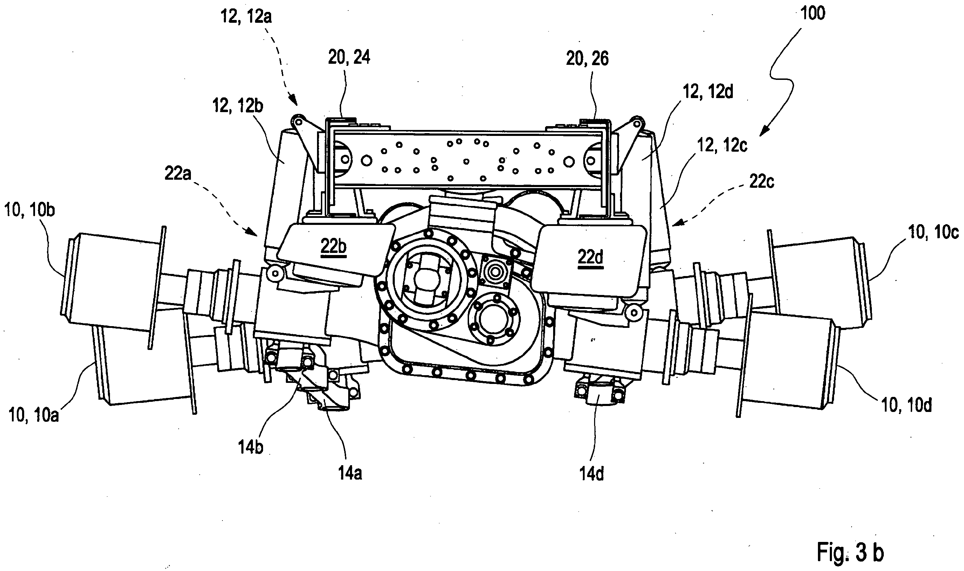

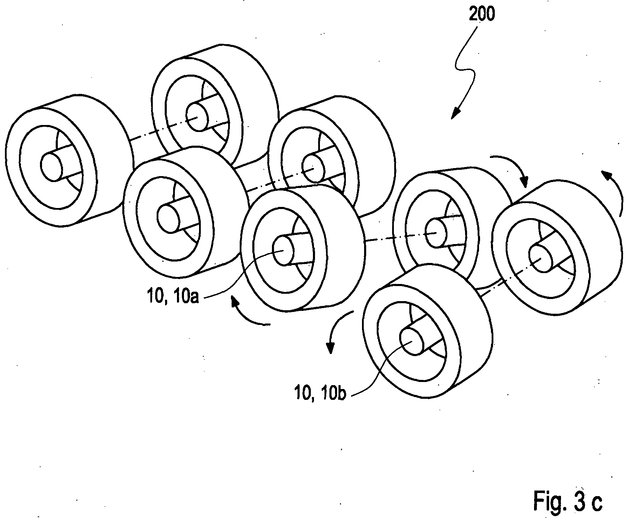

The effect of the lever unit 50 and the interaction of the stabilizer bars 60a, 60b with the lever unit 50 depicted in Fig. 1 and Fig. 2a, 2b during an axle twist is illustrated in Figures 3a to 3c in a side view (Fig. 3a) and in a front view (Fig. 3b) of the axle aggregate 10. Fig. 3c illustrates the corresponding movement of the tires of the axle aggregate 10 in comparison to other wheel axles without axle twist

An axle twist occurs when vehicle moves over uneven, bumpy ground and one of the wheel axles 10a or 10b of the axle aggregate 10 is moved up or down on one side of the frame with respect to the other wheel axle 10b or 10a. With a conventional suspension arrangement, the stabilizer bars prevent an axle twist which causes a decrease of the wheel pressure of e.g. wheel axle 10b to the ground due to the intrinsic properties of the stabilizer bar. Particularly for off-road commercial vehicles, the stabilizer bars 60a, 60b have to have a high stiffness which in conventional arrangements prevents or limits twisting of axles on uneven ground by limiting the roll of the axles otherwise needed for good traction between the left and right wheels attached to each axle.

However, according to the invention, due to the pivotable connection of the lever unit 50 to the bracket 30 and the frame 20, respectively, a movement of the stabilizer bushings is possible by moving the lever unit 50 about its pivot axis, so that the stabilizing function of the stabilizer bars 60a, 60b is alleviated in a case when the vehicle moves on uneven ground. In this situation the two wheel axles 10a, 10b rotate in opposite angles during axle twist of the tandem axle aggregate 10 because the lever unit 50 allows a rotational movement of the stabilizer bars 60a, 60b in their bushings 70a, 70b with respect to the bracket 30 and limits a reduction of the ground pressure of the respective wheel.

As a result, the wheels of the axle aggregate 10 have a much better tire grip and traction which is particularly favourable for off road vehicles, e.g. in construction sites. The invention allows for a better traction by improving the load distribution between the left and right wheels of the wheel axles in the tandem axle aggregate 10. Traction and steerability are improved on uneven ground, as well as ride comfort and drivability.

In an example, one axle of a multi-axle aggregate, e.g. a tandem axle aggregate 10, goes up on one side by 100 mm and the other axle goes down by 100 mm at the same side of the vehicle. In a conventional suspension arrangement of a tandem axle aggregate the ground pressure of the wheel with the lowest ground pressure may be only about 20% compared to an average ground pressure of the wheels in the tandem axle aggregate. According to the invention, the lever unit 50 allows for improving the ground pressure of the wheel with the lowest ground pressure to about 90% compared to an average ground pressure of the wheels in the tandem axle aggregate.

On even ground, i.e. without axle twist, the stabilizer function is not altered compared to a conventional arrangement without a lever unit 50 and the required roll stability is maintained.

It may be expedient to provide a means for limiting the movement of the lever unit 50, for instance by integrating a spring-back function into the bearing (e.g. a rubber bushing) of the pivot joint 52 and/or the bushings 70a, 70b and/or by providing a bump stop (not shown) for the lever unit 50 at the underside of the beams 24, 26 of the frame 20 and/or at the edge of the bracket 30.

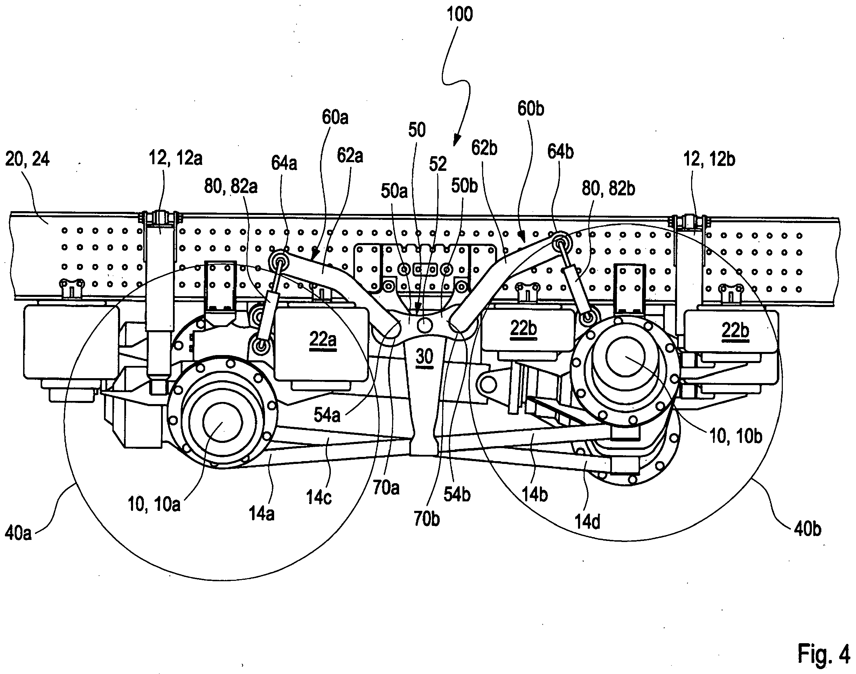

The example embodiment in Fig. 4 depicts a variant in which the connecting elements 80 connecting the end sections 62a, 62b to their respective wheel axles 10a, 10b are replaced by hydraulic units at each stabilizer bar 60a, 60b.

The other components are like in the example embodiment described in Fig. 1. In order to avoid unnecessary repetitions it is referred to the description for detailed explanation of these components.

The hydraulic unit 82a, 82b can favourably be adapted to change its neutral position when one axle 10a or 10b of the tandem axle aggregate 10 is lifted during an axle twist.

In an alternative embodiment (not displayed), one of the connecting units 80 connecting the stabilizer end sections 62a, 62b to the respective axles 10a, 10b on one side of the tandem axle aggregate 10 can be a stiff rod 80a or 80b and the other can be a hydraulic unit 82b or 82a.

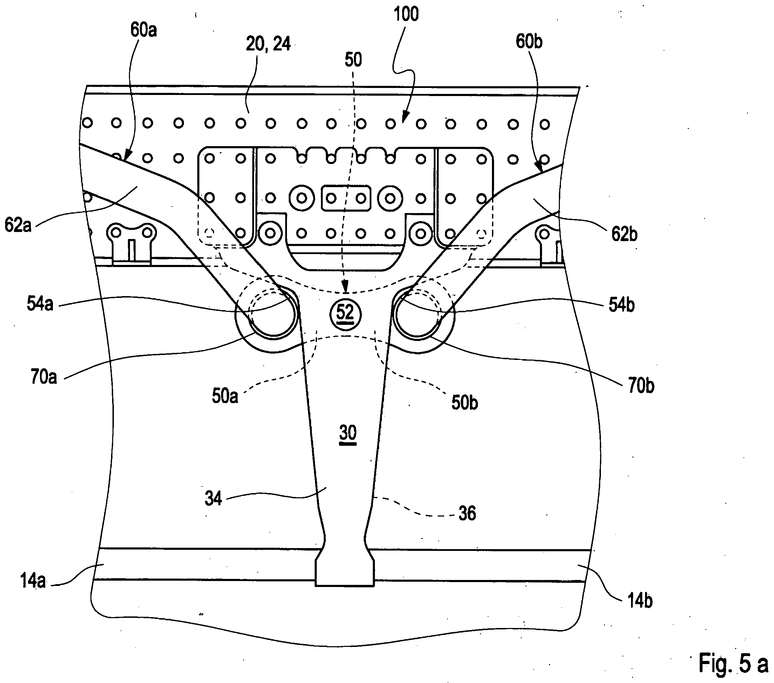

Fig. 5a depict an alternative arrangement of the lever unit 50. The lever unit 50 is arranged at an inside 36 of the bracket 30 so that the end sections 62a, 62b of the stabilizer bars 60a, 60b pass by the contour of the bracket 30.

As already mentioned, the link arms 14a, 14b can be arranged below the lever unit 50, as illustrated in the Figure or the lever unit 50 (and the stabilizer bars 60a, 60b) can be arranged below the link arms 14a, 14b. However, it is also possible to provide feedthroughs in the bracket 30 so that the end sections of the stabilizer bars 60a, 60b can pass through the bracket 30 and move freely in the feedthrough when the lever unit 50 is turned in its pivot joint 52.

Usually, the bushings 70, particularly rubber bushings, comprises two half-bushings split in parallel to the symmetry axis of the bushing 70 which are connected to each other by way of a clamp put around the two half-bushings. In an not illustrated example embodiment, in a first mounting step of a mounting method of the suspension arrangement, the upper half-bushing can be assembled into the respective receptacle 54 of the lever unit 50, then the stabilizer bar 60 is arranged in the receptacle 54, followed by the step of assembling the lower half-bushing into the receptacle 54 and connecting the two half-bushings by a clamp around the half bushings surrounding the stabilizer bar 60.

In an alternative embodiment not depicted as drawing, the lever unit 50 can be made of two parts, with a horizontal interface along the longitudinal extension of the lever unit 50. In a first step upper and the lower half-bushings 70 parts is mounted to the stabilizer bar 60 and in a subsequent step the upper and lower parts of the lever unit 50 are assembled to the stabilizer bar 60 and connected to each other by connecting means such as bolts, clamps or the like.

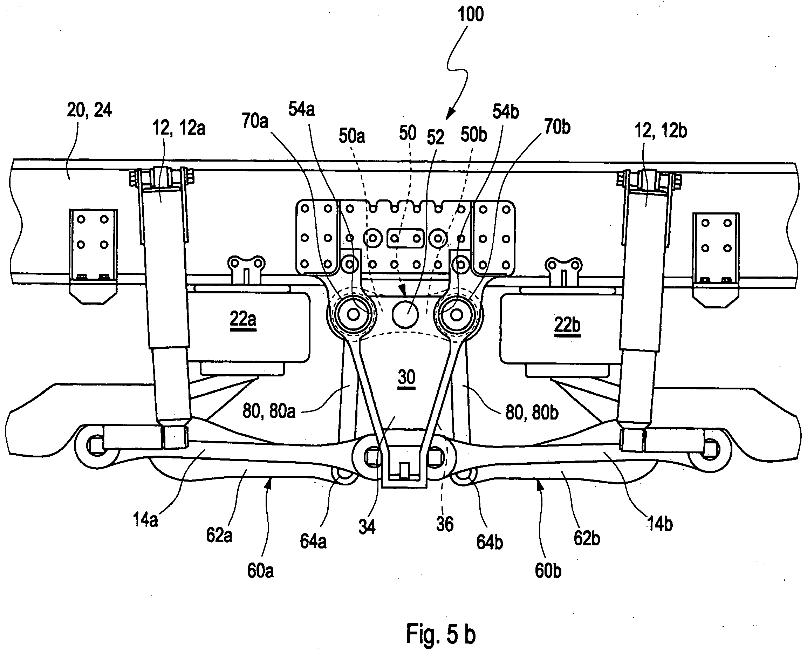

Fig. 5b illustrates an arrangement where the stabilizer bars 60 are mounted with their torsion sections to the axle aggregate 10 and with their connecting elements 80 to the lever unit 50 arranged at the inside of the bracket 30.

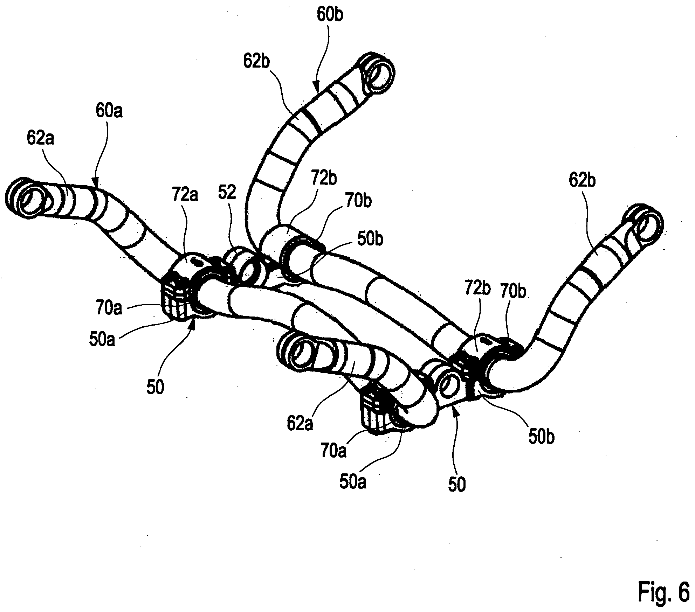

Fig. 6 depicts an example embodiment of a pre-assembly of two lever units 50 with two stabilizer bars 60, 60a, 60b, rubber bushings 70, 70a, 70b and holding sleeves 72a, 72b which can be mounted to an axle of a vehicle. A correct position of the lever unit 50 with respect to the bracket 30 can be easily achieved. All parts of the pre-assembly are easily accessible during mounting the pre-assembly. The pre-assembly does not interrupt the chassis assembly flow during manufacturing of the vehicle as it can be mounted independently from the chassis. Such vehicles which do not need the lever unit 50 can have the same chassis assembly flow during manufacturing as such vehicles which are provided with the lever unit 50.

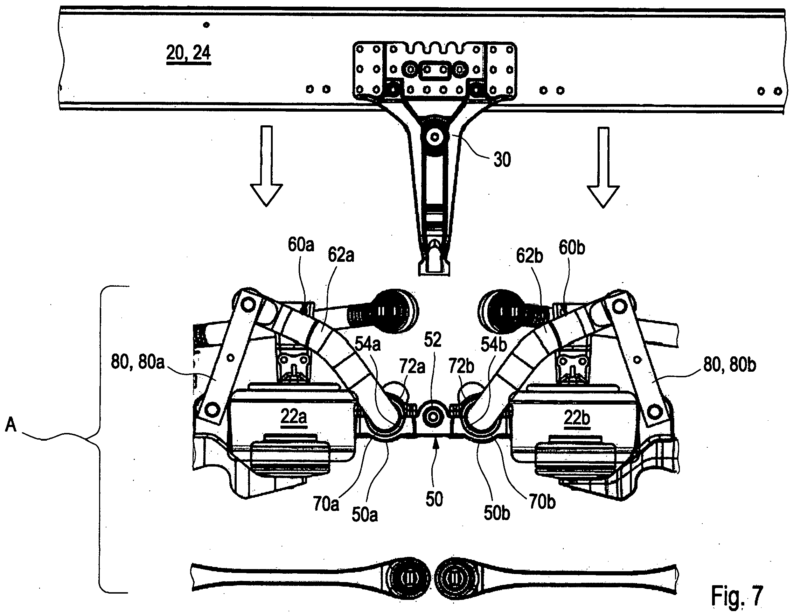

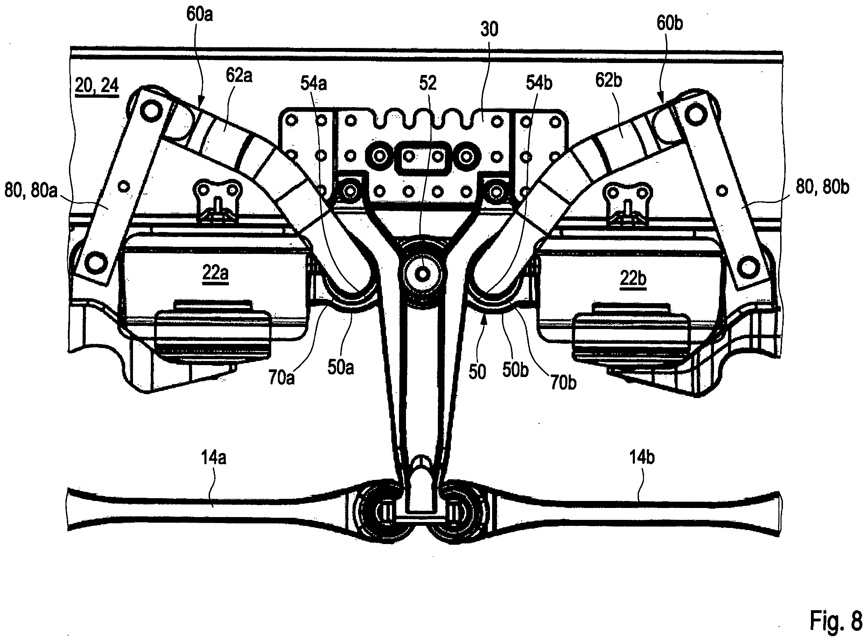

Fig. 7 shows mounting an axle assembly A including the pre-assembly of the lever unit 50 with stabilizer bars 60, 60a, 60b, rubber bushings 70, 70a, 70b and holding sleeves 72a, 72b depicted in Fig. 6 to a chassis structure (frame 20). Fig. 8 illustrates the frame 20 lowered to the axle assembly of Fig. 7. A bracket 30 is mounted to the frame 20 and released onto the axle assembly A. As can be seen, the lever units 50 guide the bracket 30 during its downward movement onto the axle assembly A when the frame 20 moves downward. All parts are easily accessible. The close proximity of the air bellows 22a and 22b to the lever unit 50 in the axle assembly A does not limit the access to parts during the assembly of the frame 20 and the axle assembly A.

Each lever unit 50 can be fixed to its respective bracket 30 by a single screw or bolt at the pivot joint 52 which can be introduced in horizontal direction from the outside of the frame 20 which facilitates the manufacturing process and can be done in an ergonomic way.

## Claims

1. A suspension arrangement (100) for an axle aggregate (10) mounted to a frame (20) of a commercial vehicle, particularly a multi-axle aggregate (10) of an off-road commercial vehicle, comprising at least a first stabilizing bar (60a) of a first wheel axle and a second stabilizing bar (60b) of a second wheel axle, wherein each stabilizing bar (60a,60b) has a torsion section extending from one side of the frame to the opposite side of the frame and end sections (62a,62b) arranged crosswise at each side of the torsion section, wherein the first and second stabilizer bars (60a,60b) are arranged in transverse direction relative to the frame (20) with their torsion sections, and wherein each end section (62a,62b) of each stabilizer bar (60a, 60b) is connected to the respective wheel axle (10a, 10b) with a connecting element (80), **characterized in that**
the at least the first and second stabilizer bars (60a, 60b) are pivotally attached to a lever unit (50), wherein the lever unit (50) has at least one pivot joint (52, 52a, 52b) with a pivot axis along the transverse direction relative to the frame (20).

2. The suspension arrangement according to claim 1, **characterized in that** a receptacle (54a, 54b) for each of the stabilizer bars (60a, 60b) is arranged at a distance from the at least one pivot joint (52, 52a, 52b).

3. The suspension arrangement according to claims 2, **characterized in that** a bushing (70a, 70b) is arranged in the receptacle (54a, 54b), wherein preferably a pivot axis of the bushing (70a, 70b) is substantially parallel to a pivot axis of the at least one pivot joint (52, 52a, 52b).

4. The suspension arrangement according to claim 3, **characterized in that** the bushing (70, 70a, 70b) is composed of at least a lower part (72) and an upper part (74) for enclosing the stabilizer bar (60a, 60b) in the receptacle (54a, 54b).

5. The suspension arrangement according to any one of the preceding claims, **characterized in that** the stabilizer bars (60a, 60b) are arranged above a link arm (14a, 14b, 14c, 14d) with respect to a longitudinal beam (24, 26) of the frame (20) or **in that** the stabilizer bars (60a, 60b) are arranged below a link arm (14a, 14b, 14c, 14d) with respect to a longitudinal beam (24, 26) of the frame (20).

6. The suspension arrangement according to any one of the preceding claims, **characterized in that** the stabilizer bars (60a, 60b) are connected to the axle aggregate (10) with a connecting element (80), wherein the connecting element (80) preferably is a rigid rod (80a, 80b) or a hydraulic unit (82a, 82b) and/or **in that** the lever unit (50) is arranged at an outside (34) of a bracket (30) with respect to a longitudinal beam (24, 26) of the frame (20).

7. The suspension arrangement according to any one of the claims 1-5, **characterized in that** the lever unit (50) is arranged at an inside (36) of a bracket (30) with respect to a longitudinal beam (24, 26) of the frame (20).

8. The suspension arrangement according to any one of the preceding claims, **characterized in that** the lever unit (50) is lockable with respect to the frame (20) or **in that** the axle aggregate (10) is a multi-axle aggregate (10) and one stabilizer bar (60a, 60b) is provided for each axle (10a, 10b) of the multi-axle aggregate (10) and connected with its torsion sections to the lever unit (50), and that the lever unit (50) has its at least one pivot joint (52, 52a, 52b) between two receptacles (54a, 54b) for the torsion sections of the stabilizer bars (60a, 60b).

9. A vehicle (200), particularly an off-road commercial vehicle, comprising a suspension arrangement (100) according to any one of the preceding claims.

10. The suspension arrangement according to any one of the preceding claims, **characterized in that** the stabilizer bars are arranged above a link arm with respect to a longitudinal beam of the frame or **in that** the stabilizer bars are arranged below a link arm with respect to a longitudinal beam of the frame ort **in that** the stabilizer bars are connected to the axle aggregate with a connecting element, wherein the connecting element is a rigid rod or a hydraulic unit or **in that** the lever unit is arranged at an outside of a bracket with respect to a longitudinal beam of the frame **in that** the lever unit is arranged at an inside of a bracket with respect to a longitudinal beam of the frame or **in that** the lever unit is lockable with respect to the frame or **in that** the axle aggregate is a multi-axle aggregate and one stabilizer bar is provided for each axle of the multi-axle aggregate and connected with its torsion sections to the lever unit, and that the lever unit has its at least one pivot joint between two receptacles for the torsion sections of the stabilizer bars.

11. A vehicle, particularly an off-road commercial vehicle, comprising a suspension arrangement according to any one of the preceding claims.

## Patentansprüche

1. Aufhängungsanordnung (100) für ein an einem Rahmen (20) eines Nutzfahrzeugs montiertes Achsaggregat (10), insbesondere ein Mehrachsaggregat (10) eines Geländenutzfahrzeugs, umfassend wenigstens einen ersten Stabilisierungsstab (60a) einer ersten Radachse und einen zweiten Stabilisierungsstab (60b) einer zweiten Radachse, wobei jeder Stabilisierungsstab (60a,60b) einen sich von einer Seite des Rahmens zu der gegenüberliegenden Seite des Rahmens erstreckenden Torsionsabschnitt und an jeder Seite des Torsionsabschnitts kreuzweise angeordnete Endabschnitte (62a,62b) aufweist, wobei der erste und der zweite Stabilisierungsstab (60a,60b) mit ihren Torsionsabschnitten in Querrichtung relativ zum Rahmen (20) angeordnet sind, und wobei jeder Endabschnitt (62a,62b) jedes Stabilisierungsstabs (60a,60b) mit einem Verbindungselement (80) mit der jeweiligen Radachse (10a, 10b) verbunden ist, **dadurch gekennzeichnet, dass**
der wenigstens erste und zweite Stabilisierungsstab (60a,60b) an einer Hebeleinheit (50) schwenkbar angebracht sind, wobei die Hebeleinheit (50) wenigstens ein Drehgelenk (52,52a,52b) mit einer Schwenkachse entlang der Querrichtung relativ zum Rahmen (20) aufweist.

2. Aufhängungsanordnung nach Anspruch 1, **dadurch gekennzeichnet, dass** eine Aufnahme (54a,54b) für jeden der Stabilisierungsstäbe (60a,60b) in einem Abstand von dem wenigstens einen Drehgelenk (52,52a,52b) angeordnet ist.

3. Aufhängungsanordnung nach Anspruch 2, **dadurch gekennzeichnet, dass** eine Buchse (70a,70b) in der Aufnahme (54a,54b) angeordnet ist, wobei vorzugsweise eine Schwenkachse der Buchse (70a,70b) im Wesentlichen parallel zu einer Schwenkachse des wenigstens einen Drehgelenks (52,52a,52b) ist.

4. Aufhängungsanordnung nach Anspruch 3, **dadurch gekennzeichnet, dass** die Buchse (70,70a,70b) aus wenigstens einem unteren Teil (72) und einem oberen Teil (74) zum Umschließen des Stabilisierungsstabs (60a,60b) in der Aufnahme (54a,54b) besteht.

5. Aufhängungsanordnung nach einem der vorhergehenden Ansprüche, **dadurch gekennzeichnet, dass** die Stabilisierungsstäbe (60a,60b) bezüglich eines Längsträgers (24,26) des Rahmens (20) über einem Verbindungsarm (14a,14b,14c,14d) angeordnet sind oder dass die Stabilisierungsstäbe (60a,60b) bezüglich eines Längsträgers (24,26) des Rahmens (20) unter einem Verbindungsarm (14a,14b,14c,14d) angeordnet sind.

6. Aufhängungsanordnung nach einem der vorhergehenden Ansprüche, **dadurch gekennzeichnet, dass** die Stabilisierungsstäbe (60a,60b) mit einem Verbindungselement (80) mit dem Achsaggregat (10) verbunden sind, wobei das Verbindungselement (80) vorzugsweise eine starre Stange (80a,80b) oder eine Hydraulikeinheit (82a,82b) ist, und/oder dass die Hebeleinheit (50) bezüglich eines Längsträgers (24,26) des Rahmens (20) an einer Außenseite (34) einer Halterung (30) angeordnet ist.

7. Aufhängungsanordnung nach einem der Ansprüche 1-5, **dadurch gekennzeichnet, dass** die Hebeleinheit (50) bezüglich eines Längsträgers (24,26) des Rahmens (20) an einer Innenseite (36) einer Halterung (30) angeordnet ist.

8. Aufhängungsanordnung nach einem der vorhergehenden Ansprüche, **dadurch gekennzeichnet, dass** die Hebeleinheit (50) bezüglich des Rahmens (20) verriegelbar ist oder dass das Achsaggregat (10) ein Mehrachsaggregat (10) ist und ein Stabilisierungsstab (60a,60b) für jede Achse (10a, 10b) des Mehrachsaggregats (10) vorgesehen und mit seinen Torsionsabschnitten mit der Hebeleinheit (50) verbunden ist, und dass das wenigstens eine Drehgelenk (52,52a,52b) der Hebeleinheit (50) sich zwischen zwei Aufnahmen (54a,54b) für die Torsionsabschnitte der Stabilisierungsstäbe (60a,60b) befindet.

9. Fahrzeug (200), insbesondere ein Geländenutzfahrzeug, umfassend eine Aufhängungsanordnung (100) nach einem der vorhergehenden Ansprüche.

10. Aufhängungsanordnung nach einem der vorhergehenden Ansprüche, **dadurch gekennzeichnet, dass** die Stabilisierungsstäbe bezüglich eines Längsträgers des Rahmens über einem Verbindungsarm angeordnet sind oder dass die Stabilisierungsstäbe bezüglich eines Längsträgers des Rahmens unter einem Verbindungsarm angeordnet sind oder dass die Stabilisierungsstäbe mit einem Verbindungselement mit dem Achsaggregat verbunden sind, wobei das Verbindungselement eine starre Stange oder eine Hydraulikeinheit ist oder dass die Hebeleinheit bezüglich eines Längsträgers des Rahmens an einer Außenseite einer Halterung angeordnet ist oder dass die Hebeleinheit bezüglich eines Längsträgers des Rahmens an einer Innenseite einer Halterung angeordnet ist oder dass die Hebeleinheit bezüglich des Rahmens verriegelbar ist oder dass das Achsaggregat ein Mehrachsaggregat ist und ein Stabilisierungsstab für jede Achse des Mehrachsaggregats vorgesehen und mit seinen Torsionsabschnitten mit der Hebeleinheit verbunden ist, und dass das wenigstens eine Drehgelenk der Hebeleinheit sich zwischen zwei Aufnahmen für die Torsionsabschnitte der Stabilisierungsstäbe befindet.

11. Fahrzeug, insbesondere ein Geländenutzfahrzeug, umfassend eine Aufhängungsanordnung nach einem der vorhergehenden Ansprüche.

## Revendications

1. Agencement de suspension (100) pour un ensemble d'essieux (10) monté sur un châssis (20) d'un véhicule utilitaire, particulièrement un ensemble à plusieurs essieux (10) d'un véhicule utilitaire hors route, comprenant au moins une première barre stabilisatrice (60a) d'un premier essieu de roue et une deuxième barre stabilisatrice (60b) d'un deuxième essieu de roue, où chaque barre stabilisatrice (60a, 60b) a une section de torsion s'étendant à partir d'un côté du châssis au côté opposé du châssis et des sections d'extrémité (62a, 62b) agencées en croix de chaque côté de la section de torsion, où les première et deuxième barres stabilisatrices (60a, 60b) sont agencées dans la direction transversale par rapport au châssis (20) avec leurs sections de torsion, et où chaque section d'extrémité (62a, 62b) de chaque barre stabilisatrice (60a, 60b) est reliée à l'essieu de roue respectif (10a, 10b) avec un élément de raccordement (80), **caractérisé en ce que**
les au moins première et deuxième barres stabilisatrices (60a, 60b) sont fixées en pivotement à une unité de levier (50), où l'unité de levier (50) a au moins une articulation à pivot (52, 52a, 52b) avec un axe de pivotement le long de la direction transversale par rapport au châssis (20).

2. Agencement de suspension selon la revendication 1, **caractérisé en ce qu'**un logement (54a, 54b) pour chacune des barres stabilisatrices (60a, 60b) est agencé à une certaine distance de l'au moins une articulation à pivot (52, 52a, 52b).

3. Agencement de suspension selon la revendication 2, **caractérisé en ce qu'**une douille (70a, 70b) est agencée dans le logement (54a, 54b), où de préférence un axe de pivotement de la douille (70a, 70b) est essentiellement parallèle à un axe de pivotement de l'au moins une articulation à pivot (52, 52a, 52b).

4. Agencement de suspension selon la revendication 3, **caractérisé en ce que** la douille (70, 70a, 70b) est composée d'au moins une partie inférieure (72) et une partie supérieure (74) pour enfermer la barre stabilisatrice (60a, 60b) dans le logement (54a, 54b).

5. Agencement de suspension selon l'une quelconque des revendications précédentes, **caractérisé en ce que** les barres stabilisatrices (60a, 60b) sont agencées au-dessus d'un bras de liaison (14a, 14b, 14c, 14d) par rapport à une poutre longitudinale (24, 26) du châssis (20) ou **en ce que** les barres stabilisatrices (60a, 60b) sont agencées en dessous d'un bras de liaison (14a, 14b, 14c, 14d) par rapport à une poutre longitudinale (24, 26) du châssis (20).

6. Agencement de suspension selon l'une quelconque des revendications précédentes, **caractérisé en ce que** les barres stabilisatrices (60a, 60b) sont reliées à l'ensemble d'essieux (10) avec un élément de raccordement (80), où l'élément de raccordement (80) est de préférence une tige rigide (80a, 80b) ou une unité hydraulique (82a, 82b) et/ou **en ce que** l'unité de levier (50) est agencée au niveau d'une partie extérieure (34) d'un support (30) par rapport à une poutre longitudinale (24, 26) du châssis (20).

7. Agencement de suspension selon l'une quelconque des revendications 1 à 5, **caractérisé en ce que** l'unité de levier (50) est agencée au niveau d'une partie intérieure (36) d'un support (30) par rapport à une poutre longitudinale (24, 26) du châssis (20).

8. Agencement de suspension selon l'une quelconque des revendications précédentes, **caractérisé en ce que** l'unité de levier (50) peut être verrouillée par rapport au châssis (20) ou **en ce que** l'ensemble d'essieux (10) est un ensemble à plusieurs essieux (10) et une barre stabilisatrice (60a, 60b) est prévue pour chaque essieu (10a, 10b) de l'ensemble à plusieurs essieux (10) et reliée avec ses sections de torsion à l'unité de levier (50), et **en ce que** l'au moins une articulation à pivot (52, 52a, 52b) de l'unité de levier (50) se trouve entre deux logements (54a, 54b) pour les sections de torsion des barres stabilisatrices (60a, 60b).

9. Véhicule (200), particulièrement un véhicule utilitaire hors route, comprenant un agencement de suspension (100) selon l'une quelconque des revendications précédentes.

10. Agencement de suspension selon l'une quelconque des revendications précédentes, **caractérisé en ce que** les barres stabilisatrices sont agencées au-dessus d'un bras de liaison par rapport à une poutre longitudinale du châssis ou **en ce que** les barres stabilisatrices sont agencées en dessous d'un bras de liaison par rapport à une poutre longitudinale du châssis ou **en ce que** les barres stabilisatrices sont reliées à l'ensemble d'essieux avec un élément de raccordement, où l'élément de raccordement est une tige rigide ou une unité hydraulique ou **en ce que** l'unité de levier est agencée au niveau d'une partie extérieure d'un support par rapport à une poutre longitudinale du châssis ou **en ce que** l'unité de levier est agencée au niveau d'une partie intérieure d'un support par rapport à une poutre longitudinale du châssis ou **en ce que** l'unité de levier peut être verrouillée par rapport au châssis ou **en ce que** l'ensemble d'essieux est un ensemble à plusieurs essieux et une barre stabilisatrice est prévue pour chaque essieu de l'ensemble à plusieurs essieux et reliée avec ses sections de torsion à l'unité de levier, et **en ce que** l'au moins une articulation à pivot de l'unité de levier se trouve entre deux logements pour les sections de torsion des barres stabilisatrices.

11. Véhicule, particulièrement un véhicule utilitaire hors route, comprenant un agencement de suspension selon l'une quelconque des revendications précédentes.
